(19) Europäisches Patentamt / European Patent Office / Office européen des brevets

(11) **EP 1 706 707 B1**

(12) **EUROPÄISCHE PATENTSCHRIFT**

(45) Veröffentlichungstag und Bekanntmachung des Hinweises auf die Patenterteilung:
**02.05.2007   Patentblatt 2007/18**

(21) Anmeldenummer: **04798097.4**

(22) Anmeldetag: **26.11.2004**

(51) Int Cl.:
***G01C 19/56*** *(2006.01)*

(86) Internationale Anmeldenummer:
**PCT/EP2004/013447**

(87) Internationale Veröffentlichungsnummer:
**WO 2005/066585 (21.07.2005 Gazette 2005/29)**

(54) **VERFAHREN ZUR QUADRATURBIAS-KOMPENSATION IN EINEM CORIOLISKREISEL SOWIE DAFÜR GEEIGNETER CORIOLISKREISEL**

METHOD FOR COMPENSATING A CORIOLIS GYROSCOPE QUADRATURE BIAS AND A CORIOLIS GYROSCOPE FOR CARRYING OUT SAID METHOD

PROCEDE DE COMPENSATION DE LA POLARISATION DE QUADRATURE DANS UN GYROSCOPE DE CORIOLIS ET GYROSCOPE DE CORIOLIS DESTINE A CET EFFET

(84) Benannte Vertragsstaaten:
**AT BE BG CH CY CZ DE DK EE ES FI FR GB GR HU IE IS IT LI LU MC NL PL PT RO SE SI SK TR**

(30) Priorität: **23.12.2003   DE 10360962**

(43) Veröffentlichungstag der Anmeldung:
**04.10.2006   Patentblatt 2006/40**

(73) Patentinhaber: **LITEF GmbH**
**79115 Freiburg (DE)**

(72) Erfinder:
• **HANDRICH, Eberhard**
**79199 Kirchzarten (DE)**

• **GEIGER, Wolfram,**
**Litef GmbH**
**79115 Freiburg (DE)**

(74) Vertreter: **Müller, Frithjof E.**
**Müller Hoffmann & Partner**
**Patentanwälte**
**Innere Wiener Strasse 17**
**81667 München (DE)**

(56) Entgegenhaltungen:
WO-A-03/058167     US-A- 6 067 858
US-A1- 2001 039 834     US-A1- 2003 061 877

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die Erfindung betrifft ein Verfahren zur Quadraturbias-Kompensation in einem Corioliskreisel sowie einen dafür geeigneten Corioliskreisel.

Corioliskreisel (auch Vibrationskreisel genannt) werden in zunehmendem Umfang zu Navigationszwecken eingesetzt; sie weisen ein Massensystem auf, das in Schwingungen versetzt wird. Jedes Massensystem hat in der Regel eine Vielzahl von Schwingungsmoden, die zunächst voneinander unabhängig sind. Zum Betrieb des Corioliskreisels wird ein bestimmter Schwingungsmode des Massensystems künstlich angeregt, der im Folgenden als "Anregungsschwingung" bezeichnet wird. Wenn der Corioliskreisel gedreht wird, treten Corioliskräfte auf, die der Anregungssch- wingung des Massensystems Energie entnehmen und damit einen weiteren Schwingungsmode des Massensystems, der im Folgenden als "Ausleseschwingung" bezeichnet wird, übertragen. Um Drehungen des Corioliskreisels zu ermitteln, wird die Ausleseschwingung abgegriffen und ein entsprechendes Auslesesignal daraufhin untersucht, ob Änderungen in der Amplitude der Ausleseschwingung, die ein Maß für die Drehung des Corioliskreisels darstellen, aufgetreten sind. Corioliskreisel können sowohl als Open-Loop-System als auch als Closed-Loop-System realisiert werden. In einem Closed-Loop-System wird über jeweilige Regelkreise die Amplitude der Ausleseschwingung fortlaufend auf einen festen Wert - vorzugsweise Null - rückgestellt, und die Rückstellkräfte gemessen.

Das Massensystem des Corioliskreisels (das im Folgenden auch als "Resonator" bezeichnet wird) kann hierbei unterschiedlichst ausgestaltet sein. Beispielsweise ist es möglich, ein einstückig ausgebildetes Massensystem zu verwenden. Alternativ ist es möglich, das Massensystem in zwei Schwinger aufzuteilen, die miteinander über ein Federsystem gekoppelt sind und Relativbewegungen zueinander ausführen können. Beispielsweise ist es bekannt, ein gekoppeltes System aus zwei linearen Schwingern zu verwenden, das auch als lineares Doppelschwingersystem bezeichnet wird. Verwendet man ein derartiges gekoppeltes System, so sind aufgrund von Fertigungstoleranzen Fehlausrichtungen der beiden Schwinger zueinander unvermeidlich. Die Fehlausrichtungen der beiden Schwinger zueinander erzeugen einen Nullpunktfehleranteil im gemessenen Drehratensignal, den sogenannten "Quadraturbias" (genauer gesagt: einen Quadraturbias-Anteil).

Zur Kompensation des Quadraturbias kommen Verfahren zum Einsatz, wie sie beispielsweise in den Druckschriften US-A-2003/061877, WO-A-03/058167 sowie US-A-6,067,858 gezeigt sind. In diesem Verfahren werden zur Kompensation des Quadraturbias Wechselkräfte eingesetzt.

Die der Erfindung zugrundeliegende Aufgabe ist es, ein Verfahren und einen Corioliskreisel anzugeben, mit dem ein derartiger Quadraturbiasanteil kompensiert werden kann.

Diese Aufgabe wird erfindungsgemäß durch ein Verfahren zur Quadraturbias-Kompensation für einen Resonator mit zwei linearen Schwingern gemäß Patentanspruch 1 gelöst. Weiterhin stellt die Erfindung eine dafür geeignete Ausführungsform eines Corioliskreisels gemäß Patentanspruch 4 bereit. Vorteilhafte Ausgestaltungen bzw. Weiterbildungen des Erfindungsgedankens finden sich in jeweiligen abhängigen Ansprüchen.

Um ein besseres Verständnis des technischen Hintergrunds des erfindungsgemäßen Verfahrens zu bekommen, sei in der folgenden Beschreibung nochmals kurz auf die physikalischen Grundlagen eines Corioliskreisels anhand des Beispiels eines linearen Doppelschwingersyeteins eingegangen.

Die Corioliskraft lässt sich darstellen als:

$$\bar{F} = 2m\bar{v}_s x\bar{\Omega} \qquad (1)$$

$\bar{F}$  Corioliskraft
$m$  Masse des Schwingers
$\bar{v}_s$  Geschwindigkeit des Schwingers
$\bar{\Omega}$  Drehrate

Ist die auf die Corioliskraft reagierende Masse gleich der schwingenden Masse und wird der Schwinger mit der Eigenfrequenz ω betrieben, so gilt:

$$2m\bar{v}_s x\bar{\Omega} = m\bar{a}_c \qquad (2)$$

Für die Schwingergeschwindigkeit gilt:

$$\bar{v}_s = \bar{v}_{s0} \cdot \sin\omega t \qquad\qquad (3)$$

mit

$\bar{v}_{s0}$     *Schwingeramplitude*
$\omega$     *Eigenfrequenz des Schwingers*

Somit gilt für die Schwinger- und Coriolisbeschleunigungen:

$$\bar{a}_s = \bar{v}_{s0}\,\omega\cos\omega t$$

$$\bar{a}_c = 2\bar{v}_{s0}\sin\omega t \times \bar{\Omega} \qquad\qquad (4)$$

Damit stehen die beiden Beschleunigungsvektoren räumlich senkrecht aufeinander und sind in der Zeitfunktion um 90° gegeneinander versetzt (räumliche und zeitliche Orthogonalität).

Diese beiden Kriterien können benutzt werden, um die Schwingerbeschleunigung $\bar{\alpha}_s$ von der Coriolisbeschleunigung $\bar{\alpha}_c$ zu trennen. Das Verhältnis der o. g. Beschleunigungsamplituden $a_c$ und $a_s$ beträgt:

$$\frac{a_c}{a_s} = \frac{2\Omega}{\omega} \qquad\qquad (5)$$

Für eine Drehrate $\Omega = 5°/h$ und eine Eigenfrequenz des Schwingers $f_s = 10\,KHz$ ergibt sich:

$$\frac{a_c}{a_s} = 7{,}7 \cdot 10^{-10} \qquad\qquad (6)$$

Für eine Genauigkeit von 5°/h dürfen unerwünschte Kopplungen des ersten Schwingers auf den zweiten Schwinger höchstens $7{,}7 \cdot 10^{-10}$ betragen oder auf diesem Wert konstant sein. Verwendet man ein Massensystem aus zwei linearen Schwingern, die über Federelemente miteinander gekoppelt sind, so ist die Genauigkeit der räumlichen Orthogonalität aufgrund der Fehlausrichtung der Federelemente zwischen Schwing- und Messmode begrenzt. Die erreichbare Genauigkeit (durch Fertigungstoleranzen begrenzt) beträgt $10^{-3}$ bis $10^{-4}$. Die Genauigkeit der zeitlichen Orthogonalität wird durch die Phasengenauigkeit der Elektronik bei z. Bsp. 10 KHz begrenzt, die ebenfalls nur auf höchstens $10^{-3}$ bis $10^{-4}$ einzuhalten ist. Daraus folgt; dass das oben definierte Verhältnis der Beschleunigungen nicht eingehalten werden kann.

Realistisch ergibt sich ein Fehler des gemessenen Beschleunigungsverhältnisses $a_c/a_s$ von

$$\frac{a_c}{a_s} = 10^{-6} \; bis \; 10^{-8} \qquad\qquad (7)$$

Der räumliche Fehler resultiert in einem sogenannten Quadraturbias $B_Q$, der mit dem zeitlichen Phasenfehler $\Delta_\varphi$ einen Bias B ergibt:

$$B_\theta = 6{,}5 \cdot 10^6 \ °/h \ \text{bis} \ 6{,}5 \cdot 10^5 \ °/h$$

$$\Delta_\varphi = 10^{-3} \ \text{bis} \ 10^{-4} \tag{8}$$

$$B = B_\theta \cdot \Delta_\varphi = 6{.}500 \ °/h \ \text{bis} \ 65 \ °/h$$

Somit bewirkt der Quadraturbias eine starke Einschränkung der Messgenauigkeit. Dabei ist anzumerken, dass o. g. Fehlerbetrachtung nur die direkte Kopplung vom Schwing- in den Auslesemode berücksichtigt. Es existieren noch weitere Quadraturbiasanteile, die beispielsweise durch Kopplungen mit anderen Schwingungsmoden entstehen.

Das erfindungsgemäße Verfahren zur guadraturbias-Kompensation lässt sich insbesondere auf Corioliskreisel anwenden, deren Resonatoren als gekoppelte Systeme aus wenigstens einem ersten und einem zweiten linearen Schwinger ausgestaltet sind, und weist die folgenden Schritte auf:

-   Ermitteln des Quadraturbias des Schwingersystems, und
-   Erzeugen eines elektrostatischen Felds zur Änderung der gegenseitigen Ausrichtung der beiden Schwinger zueinander, wobei die Ausrichtung/Stärke des elektrostatischen Felds so geregelt wird, dass der ermittelte Quadraturbias möglichst klein wird.

Hierbei wird vorzugsweise der gesamte Quadraturbias des Schwingersystems ermittelt. Dies erfolgt vorzugsweise durch Demodulation eines durch Ausleseelektroden erzeugten Auslesesignals mit 0° und entsprechender Rückstellung. Alternativ ist es möglich, gezielt nur den Teil des Quadraturbias zu ermitteln, der durch die Fehlausrichtung der beiden linearen Schwinger zueinander bewirkt wird. Der Begriff "Quadraturbias" beinhaltet beide Alternativen.

Der Quadraturbias wird also am Entstehungsort selbst eliminiert, d. h. mechanische Fehlausrichtungen der beiden Schwinger zueinander werden durch eine elektrostatische Kraft, die auf einen oder beide Schwinger wirkt und durch das elektrostatische Feld erzeugt wird, kompensiert.

Der Corioliskreisel weist erste und zweite Federelemente auf, wobei der erste Schwinger durch die ersten Federelemente mit einem Kreiselrahmen des Corioliskreisels verbunden ist, und der zweite Schwinger durch die zweiten Federelemente mit dem ersten Schwinger verbunden ist. Das elektrostatische Feld bewirkt hierbei eine Änderung der Ausrichtung der ersten Federelemente und/oder eine Änderung der Ausrichtung der zweiten Federelemente. Vorzugsweise wird die Ausrichtung der zweiten Federelemente geändert, indem die Position/Ausrichtung des zweiten Schwingers durch das elektrostatische Feld geändert wird. Analog hierzu wird die Ausrichtung der ersten Federelemente vorzugsweise dadurch geändert, dass die Position/Ausrichtung des ersten Schwingers durch das elektrostatische Feld geändert wird. Die Änderung der Positionen/Ausrichtungen der Schwinger bewirken hierbei eine Verbiegung der Federelemente, die an den Schwingern befestigt sind, womit entsprechende Ausrichtungswinkel der ersten zu zweiten Federelementen korrigiert werden können.

In einer besonders bevorzugten Ausführungsform werden durch das elektrische Feld die Ausrichtungswinkel der ersten und zweiten Federelemente so geändert, dass eine Orthogonalisierung der Ausrichtungen der ersten und zweiten Federelemente zueinander bewirkt wird. Ist eine derartige Orthoganalisierung erreicht, so ist der dadurch erzeugte Quadraturbias(anteil) kompensiert. Bei weiteren Beiträgen zum Quadraturbias wird der Fehlwinkel zur Orthogonalität so eingestellt, dass der gesamte Quadraturbias verschwindet. Vorzugsweise werden die Ausrichtungswinkel der zweiten. Federelemente bezüglich des ersten Schwingers durch das elektrostatische Feld geändert, und die Ausrichtungswinkel der ersten Federelemente bezüglich des Kreiselrahmens des Corioliskreisels nicht geändert. Es ist jedoch auch möglich, durch das elektrostatische Feld lediglich die Ausrichtungswinkel der ersten Federelemente zu ändern, oder die Ausrichtungswinkel sowohl der ersten als auch der zweiten Federelemente zu ändern.

Das erfindungsgemäße Verfahren stellt ferner einen Corioliskreisel bereit, dessen Resonator als gekoppeltes System aus wenigstens einem ersten und einem zweiten linearen Schwinger ausgestaltet ist, und der

-   eine Einrichtung zur Erzeugung eines elektrostatischen Felds, durch das die Ausrichtung der beiden Schwinger zueinander änderbar ist,
-   eine Einrichtung zur Ermittlung eines Quadraturbias, der durch Fehlausrichtungen der beiden Schwinger zueinander und weiteren Kopplungsmechanismen verursacht wird, und
-   einen Regelkreis aufweist, wobei der Regelkreis die Stärke des elektrostatischen Felds in Abhängigkeit des ermittelten Quadraturbias so regelt, dass der ermittelte Quadraturbias möglichst klein wird.

Der Corioliskreisel weist erste und zweite Federelemente auf, wobei die ersten Federelemente den ersten Schwinger mit dem Kreiselrahmen des Corioliskreisels verbinden, und die zweite Federelemente den zweiten Schwinger mit dem ersten Schwinger verbinden. Die Ausrichtungen der ersten und zweiten Federelemente verlaufen hierbei vorzugsweise senkrecht zueinander. Die Federelemente können hierbei eine beliebige Form aufweisen.

Es hat sich als vorteilhaft erwiesen, den zweiten Schwinger am ersten Schwinger "einseitig" zu befestigen bzw. einzuspannen. "Einseitig eingespannt" kann hierbei sowohl wörtlich als auch in einem allgemeinen Sinn verstanden werden. Allgemein bedeutet "einseitig" befestigt bzw. eingespannt, dass die Krafteinleitung von dem ersten Schwinger auf den zweiten Schwinger im Wesentlichen von einer "Seite" des ersten Schwingers aus erfolgt. Wäre der Aufbau des Schwingersystems beispielsweise derart, dass der zweite Schwinger durch den ersten Schwinger eingerahmt wird und mit diesem durch zweite Federelemente verbunden ist, so würde einseitig eingespannt bzw. befestigt folgendes implizieren: der zweite Schwinger wird der Bewegung des ersten Schwingers nachgeführt, indem der erste Schwinger den zweiten Schwinger mittels der zweiten Federelemente abwechselnd "schiebt" oder "zieht". Ein einseitiges Einspannen des zweiten Schwingers am ersten Schwinger hat den Vorteil, dass bei Ausüben einer elektrostatischen Kraft auf den zweiten Schwinger aufgrund der dadurch resultierenden Ausrichtungs-/Positionsänderung des zweiten Schwingers die zweiten Federelemente leicht verbogen werden können und damit der entsprechende Ausrichtungswinkel der zweiten Federelemente problemlos geändert werden kann. Wäre in diesem Beispiel der zweite Schwinger an zusätzlichen zweiten Federelementen aufgehängt derart, dass bei einer Bewegung des ersten Schwingers der zweite Schwinger durch die zweiten Federelemente gleichzeitig "gezogen" und "geschoben" würde, so läge eine "zweiseitige" Einspannung bzw. Befestigung des zweiten Schwingers an dem ersten Schwinger vor (Krafteinleitung auf den zweiten Schwinger von zwei gegenüberliegenden Seiten des ersten Schwingers aus). In diesem Fall würden die zusätzlichen zweiten Federelemente bei Anlegen eines elektrostatischen Felds entsprechende Gegenkräfte erzeugen, so dass Änderungen der Ausrichtungswinkel der zweiten Federelemente nur schwer erzielbar wären. Eine zweiseitige Einspannung ist jedoch dann akzeptabel, wenn die zusätzlichen zweiten Federelemente so ausgelegt sind, dass der Einfluss dieser Federelemente gering ist und somit auch hier eine problemlose Verbiegung aller Federelemente erfolgen kann, also effektiv eine einseitige Einspannung vorliegt. Je nach Auslegung der Schwingerstruktur kann effektiv bereits eine einseitige Einspannung vorliegen, wenn der "Einfluss" (Krafteinleitung) der zusätzlichen zweiten Federelemente 40% oder weniger beträgt. Dieser Wert stellt jedoch keine Einschränkung der Erfindung dar, es ist auch denkbar dass der Einfluss der zweiten Federelemente mehr als 40% beträgt. Eine einseitige Einspannung kann beispielsweise dadurch realisiert werden, dass alle zweiten Federelemente, die den zweiten Schwinger mit dem ersten Schwinger verbinden, parallel und in einer Ebene zueinander angeordnet sind. Dabei sind alle Anfangs- und Endpunkte der zweiten Federelemente jeweils an den gleichen Seiten des ersten bzw. zweiten Schwingers befestigt. Die Anfangs- und Endpunkte der zweiten Federelemente können dabei vorteilhafterweise jeweils auf einer gemeinsamen Achse liegen, wobei die Achsen die zweiten Federelemente im rechten Winkel schneiden.

Ist der zweite Schwinger einseitig am ersten Schwinger befestigt bzw. eingespannt, so sind die ersten Federelemente vorzugsweise so ausgestaltet, dass diese den ersten Schwinger am Kreiselrahmen zweiseitig einspannen (die Begriffe "einseitig" und "zweiseitig" sind hier analog zu verwenden). Alternativ hierzu ist es jedoch möglich, auch die ersten Federelemente so auszugestalten, dass sie den ersten Schwinger einseitig einspannen. Beispielsweise können sämtliche erste Federelemente, die den ersten Schwinger mit dem Kreiselrahmen des Corioliskreisels verbinden, parallel und in einer Ebene zueinander angeordnet sein, wobei vorzugsweise die Anfangs- und Endpunkte der ersten Federelemente jeweils auf einer gemeinsamen Achse liegen. Genauso ist es möglich, die Federelemente so auszugestalten, dass der erste Schwinger am Kreiselrahmen einseitig eingespannt ist, und der zweite Schwinger durch den ersten Schwinger zweiseitig eingespannt wird. Auch ist es möglich, beide Schwinger zweiseitig einzuspannen. Für die Quadraturbiaskompensatlon hat es sich als vorteilhaft erwiesen, wenigstens einen der beiden Schwinger einseitig einzuspannen.

Eine weitere vorteilhafte Ausführungsform eines erfindungsgemäßen Corioliskreisels weist einen ersten und einen zweiten Resonator auf, die jeweils als gekoppeltes System aus einem ersten und einem zweiten linearen Schwinger ausgestaltet sind, wobei der erste Resonator mit dem zweiten Resonator mechanisch/elektrostatisch so verbunden/gekoppelt ist, dass beide Resonatoren entlang einer gemeinsamen Schwingungsachse gegentaktig zueinander in Schwingung versetzbar sind.

Diese Ausführungsform weist demnach ein Massensystem auf, das aus zwei Doppelschwingersystemen (d.h. aus zwei Resonatoren) bzw. aus vier linearen Schwingern besteht. Das gegentaktige Schwingen der beiden Resonatoren zueinander bewirkt hierbei, dass bei entsprechender Ausgestaltung der beiden Resonatoren der Schwerpunkt des Massensystems erhalten bleibt. Dies hat zur Folge, dass das Schwingen des. Massensystems keine externen Vibrationen erzeugen kann, die wiederum Störungen in Form von Dämpfungen/Reflexionen nach sich ziehen würden. Weiterhin haben externe Vibrationen und Beschleunigungen in Richtung der gemeinsamen Schwingungsachse keinen Einfluss auf die entlang der gemeinsamen Schwingungsachse erfolgende gegentaktige Bewegung der beiden Resonatoren.

Die Kopplung des ersten Resonators mit dem zweiten Resonator kann beispielsweise über ein Federsystem erfolgen, das den ersten Resonator mit dem zweiten Resonator verbindet. Eine weitere Möglichkeit besteht darin, den ersten Resonator mit dem zweiten Resonator über ein elektrostatisches Feld zu koppeln. Beide Kopplungen können allein oder in Kombination eingesetzt werden. Es ist ausreichend, wenn beide Resonatoren in einem gemeinsamen Substrat ausgebildet sind, so dass die mechanische Kopplung durch eine mechanische Feder-Verbindung gegeben ist, die durch das gemeinsame Substrat selbst gebildet wird.

Auch in dieser Ausführungsform weist der Corioliskreisel vorteilhafterweise eine Einrichtung zur Erzeugung von elektrostatischen Feldern, durch die die Ausrichtung der linearen Schwinger zueinander veränderbar ist, eine Einrichtung zur Ermittlung des Quadraturbias des Coriollskreisels, und Regelkreise, durch die die Stärken der elektrostatischen Felder so geregelt werden, dass der ermittelte Quadraturbias möglichst klein wird, auf.

Die Ausgestaltungen des ersten und des zweiten Resonators sind vorzugsweise identisch. In diesem Fall sind die beiden Resonatoren in vorteilhafter Weise achsensymmetrisch zueinander angeordnet bezüglich einer Symmetrieachse, die senkrecht auf der gemeinsamen Schwingungsachse steht, d. h. der erste Resonator wird durch die Symmetrieachse auf den zweiten Resonator abgebildet.

Die Erfindung wird im Folgenden unter Bezugnahme auf die begleitenden Figuren in beispielsweiser Ausführungsform näher erläutert. Es zeigen:

Fig. 1 eine Prinzipskizze eines erfindungsgemäßen, aus zwei linearen Schwingern bestehenden Massensystems mit entsprechenden Regelkreisen, die der Anregung des ersten Schwingers dienen.

Fig. 2 eine Prinzipskizze eines erfindungsgemäßen, aus zwei linearen Schwingern bestehenden Massensystems mit entsprechenden Mess- und Regelkreisen für eine Drehrate $\Omega$ und einen Quadraturbias $B_Q$ sowie den Hilfsregelkreisen zur Kompensation des Quadraturbias $B_Q$.

Fig. 3 eine Prinzipsksizze eines erfindungsgemäßen, aus vier linearen Schwingern bstehenden Massensystems mit entsprechenden Mess- und Regelkreisen für eine Drehrate $\Omega$ und einen Quadraturbias $B_Q$ sowie den Hilfsregelkreisen zur Kompensation des Quadraturbias $B_Q$.

Fig. 4 eine Prinzipskizze einer bevorzugten Ausfürhrungsform des in Fig. 3 gezeigten Regelmoduls.

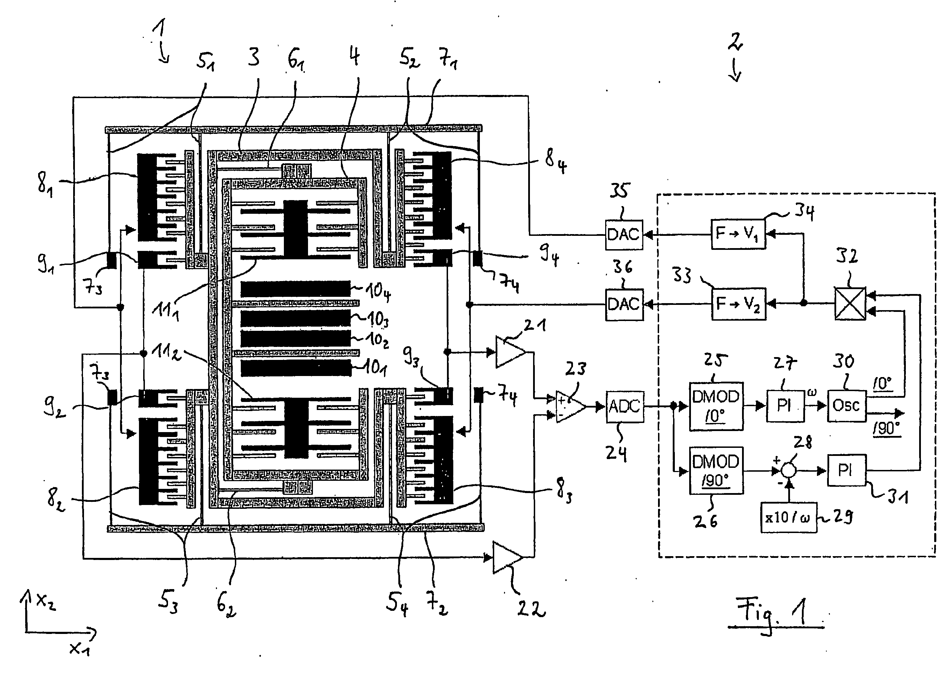

Fig. 1 zeigt den schematischen Aufbau eines linearen Doppelschwingers 1 mit entsprechenden Elektroden, sowie ein Blockschaltbild einer zugehörigen Auswerte-/Anregungselektronik 2. Der lineare Doppelschwinger 1 wird vorzugsweise mittels Ätzprozessen aus einer Siliziumscheibe hergestellt und weist einen ersten linearen Schwinger 3, einen zweiten linearen Schwinger 4, erste Federelemente $5_1$ bis $5_4$, zweite Federelemente $6_1$ und $6_2$ sowie Teile eines Zwischenrahmens $7_1$ und $7_2$ und eines Kreiselrahmens $7_3$ und $7_4$ auf. Der zweite Schwinger 4 ist innerhalb des ersten Schwingers 3 schwingbar gelagert und mit diesem über die zweiten Federelemente $6_1$, $6_2$ verbunden. Der erste Schwinger 3 ist mit dem Kreiselrahmen $7_3$, $7_4$ durch die ersten Federelemente $5_1$ bis $5_4$ und dem Zwischenrahmen $7_1$, $7_2$ verbunden.

Weiterhin sind erste Anregungselektroden $8_1$ bis $8_4$, erste Ausleseelektroden $9_1$ bis $9_4$, zweite Anregungselektroden $10_1$ bis $10_4$ sowie zweite Ausleseelektroden $11_1$ und $11_2$ vorgesehen. Sämtliche Elektroden sind mit dem Kreiselrahmen mechanisch verbunden, aber elektrisch isoliert. Unter "Kreiselrahmen" wird eine mechanische, nichtschwingende Struktur verstanden, in der die Schwinger "eingebettet" sind, beispielsweise der nichtschwingende Teil der Siliziumscheibe.

Wird der erste Schwinger 3 mittels der ersten Anregungselektroden $8_1$ bis $8_4$ zu einer Schwingung in X1-Richtung angeregt, so wird diese Bewegung durch die zweiten Federelemente $6_1$, $6_2$ auf den zweiten Schwinger 4 übertragen (abwechselndes "Ziehen" und "Schieben"). Durch die vertikale Ausrichtung der ersten Federelemente $5_1$ bis $5_4$ ist dem ersten Schwinger 3 eine Bewegung in der X2-Richtung verwehrt. Eine vertikale Schwingung kann jedoch aufgrund der horizontalen Ausrichtung der zweiten Federelemente $6_1$, $6_2$ durch den zweiten Schwinger 4 ausgeführt werden. Treten demnach entsprechende Corioliskräfte auf, so wird der zweite Schwinger 4 zu Schwingungen in der X2-Richtung angeregt.

Ein von den ersten Ausleseelektroden $9_1$ bis $9_4$ ausgelesenes, der XI-Bewegung des ersten Schwingers 3 proportionales Auslesesignal wird über entsprechende Verstärkerelemente 21, 22, und 23 einem Analog/Digital-Wandler 24 zugeführt. Ein entsprechend digitalisiertes Ausgangssignal des Analog/Digital-Wandlers 24 wird sowohl durch einen ersten Demodulator 25 und durch einen zweiten Demodulator 26 in entsprechende Ausgangssignale demoduliert, wobei die beiden Demodulatoren um 90° versetzt zueinander arbeiten. Das Ausgangssignal des ersten Demodulators 25 wird einem ersten Regler 27 zur Regelung der Frequenz der Anregungsschwingung (Schwingung des Massensystems 1 in XI-Richtung) zugeführt, dessen Ausgangssignal einen Frequenzgenerator 30 so steuert, dass das nach dem Demodulator 25 auftretende Signal auf Null geregelt wird. Analog hierzu wird das Ausgangssignal des zweiten Demodulators 26 auf einen konstanten Wert geregelt, der von der Elektronikkomponente 29 vorgegeben wird. Ein zweiter Regler 31 sorgt für die Regelung der Amplitude der Anregungsschwingung. Die Ausgangssignale des Frequenzgenerators 30 und des Amplitudenreglers 31 werden durch einen Multiplizierer 32 miteinander multipliziert. Ein Ausgangssignal des Multiplizierers 32, das der auf die ersten Anregungselektroden $8_1$ bis $8_4$ zu gebenden Kraft proportional ist, beaufschlagt sowohl einen ersten Kraft-Spannungswandler 33 als auch einen zweiten Kraft-Spannungswandler 34, die aus dem digitalen Kraftsignal digitale Spannungssignale erzeugen. Die digitalen Ausgangssignale der Kraft-Spannungswandler 33, 34 werden über einen ersten und einen zweiten Digital/Analog-Wandler 35, 36 in entsprechende analoge Spannungssignale umgesetzt, die dann auf die ersten Anregungselektroden $8_1$ bis $8_4$ gegeben werden. Durch den ersten Regler 27 und den zweiten Regler 31 werden die Frequenz der Eigenfrequenz des ersten Schwingers 3 nachgeführt und die Amplitude der Anregungsschwingung auf einen bestimmten, vorgebbaren Wert eingestellt.

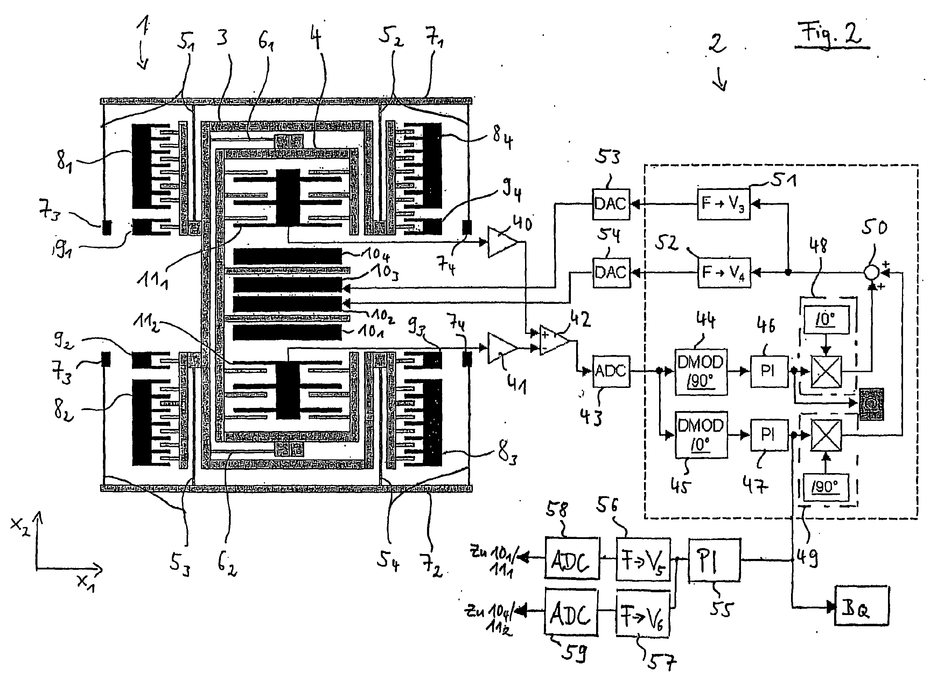

Treten Corioliskräfte auf, so wird die daraus resultierende Bewegung des zweiten Schwingers 4 in X2-Richtung (Ausleseschwingung) durch die zweiten Ausleseelektroden $11_1$, $11_2$ erfasst und ein der Bewegung der Ausleseschwingung in X2-Richtung proportionales Auslesesignal über entsprechende Verstärkerelemente 40, 41, und 42 einem Analog/Digital-Umwandler 43 zugeführt (siehe Fig. 2). Ein digitales Ausgangssignal des Analog/Digital-Umwandlers 43 wird von einem dritten Demodulator 44 in Phase mit dem Direktbiassignal demoduliert, und durch einen vierten Demodulator 45 um 90° versetzt demoduliert. Ein entsprechendes Ausgangssignal des ersten Demodulators 44 beaufschlagt einen dritten Regler 46, dessen Ausgangssignal ein Kompensationssignal ist und der zu messenden Drehrate $\Omega$ entspricht. Ein Ausgangssignal des vierten Demodulators 45 beaufschlagt einen vierten Regler 47, dessen Ausgangssignal ein Kompensationssignal ist und dem zu kompensierenden Quadraturbias proportional ist. Das Ausgangssignal des dritten Reglers wird mittels eines ersten Modulators 48 moduliert, analog hierzu wird das Ausgangssignal des vierten Reglers 47 durch einen zweiten Modulator 49 moduliert, sodass amplitudengeregelte Signale entstehen, deren Frequenz der Eigenfrequenz der Schwingung in X1-Richtung ($\sin \hat{} = 0°$, $\cos \hat{} = 90°$) entsprechen. Entsprechende Ausgangssignale der Modulatoren 48, 49 werden in einer Addierstufe 50 addiert, deren Ausgangssignal sowohl einem dritten Kraft-Spannungswandler 51 als auch einem vierten Kraft-Spannungswandler 52 zugeführt wird. Die entsprechenden Ausgangssignale der Kraft-Spannungswandler 51, 52 werden Digital/Analog-Umwandlern 53, 54 zugeführt, wobei deren analoge Ausgangssignale die zweiten Anregungselektroden $10_2$ bis $10_3$ beaufschlagen und die Schwingungsamplituden des zweiten Schwingers 4 rückstellen.

Das durch die zweiten Anregungselektroden $10_1$ und $10_4$ erzeugte elektrostatische Feld (bzw. die beiden durch die Elektrodenpaare $10_1$, $10_3$ und $10_2$, $10_4$ erzeugten elektrostatischen Felder) bewirkt eine Ausrichtungs-/Positionsänderung des zweiten Schwingers 4 in der X2-Richtung und damit eine Änderung der Ausrichtungen der zweiten Federelemente $6_1$ bis $6_2$. Der vierte Regler 47 regelt das die zweiten Anregungselektroden $10_1$ und $10_4$ beaufschlagende Signal derart, dass der Quadraturbias, der im Kompensationssignal des vierten Reglers 47 enthalten ist, möglichst klein wird bzw. verschwindet. Dazu werden ein fünfter Regler 55, ein fünfter und sechster Kraft-Spannungswandler 56, 57 und zwei Analog/Digital-Umwandler 58, 59 eingesetzt.

Das Ausgangssignal des vierten Reglers 47, das ein Maß für den Quadraturbias ist, wird dem fünften Regler 55 zugeführt, der das durch die beiden Anregungselektroden $10_1$ und $10_4$ erzeugte elektrostatische Feld so regelt, dass der Quadraturbias $B_Q$ verschwindet. Dazu wird ein Ausgangssignal des fünften Reglers 55 jeweils dem fünften und sechsten Kraft-Spannungswandler 56, 57 zugeführt, die aus dem digitalen Kraft-Ausgangssignal des fünften Reglers digitale Spannungssignale erzeugen. Diese werden anschließend in den Analog/Digital-Umwandlern 58, 59 in analoge Spannungssignale umgewandelt. Das analoge Ausgangssignal des Analog/Digital-Umwandlers 58 wird der zweiten Anregungselektrode $10_1$ oder alternativ $11_1$ zugeführt. Das analoge Ausgangssignal des Analog/Digital-Umwandlers 59 wird der zweiten Anregungselektrode $10_4$ oder alternativ $11_2$ zugeführt.

Da die Einspannung des zweiten Schwingers 4 lediglich durch die zweiten Federelemente $6_1$ bis $6_2$ bewirkt wird (einseitige Einspannung), kann die Ausrichtung dieser Federelemente durch das elektrostatische Feld problemlos geändert werden. Weiterhin ist es möglich, zusätzliche zweite Federelemente vorzusehen, die eine zweiseitige Einspannung des zweiten Schwingers 4 bewirken, solange durch entsprechende Auslegung dieser zusätzlichen Federelemente sichergestellt ist, dass effektiv eine einseitige Einspannung erzielt wird. Um denselben Effekt auch für die Federelemente $5_1$, $5_2$ bzw, die Federelemente $5_3$, $5_4$ zu ermöglichen, können das dritte und vierte Federelement $5_3$, $5_4$ bzw. das erste und zweite Federelement $5_1$, $5_2$ weggelassen werden und damit (zusammen mit einer hier nicht gezeigten, entsprechend geänderten Elektrodenkonfiguration) eine einseitige Einspannung des ersten Schwingers 3 bewirkt werden. In einem derartigen Fall könnte der zweite Schwinger 4 auch mit weiteren Federelementen am ersten Schwinger befestigt werden, um eine zweiseitige Einspannung zu erzielen.

Die in den Fig. 1 und 2 gezeigten Elektrodenanordnungen können variiert werden. Beispielsweise können die in Figuren 1 und 2 mit dem Bezugszeichen $8_1$, $9_1$, $9_2$, $8_2$ sowie $8_3$, $9_3$, $9_4$, $8_4$ gekennzeichneten Elektroden alternativ jeweils zu einer Elektrode zusammengefasst werden. Durch Verwendung geeigneter Trägerfrequenzverfahren können einer so zusammengefassten Elektrode mehrere Aufgaben zugeordnet werden, d. h. die Elektrode hat gleichzeitig Auslese-, Erregungs- und Kompensationsfunktion. Auch die mit dem Bezugszeichen $11_1$, $10_1$, $10_3$ sowie $11_2$, $10_2$ und $10_4$ gekennzeichneten Elektroden können alternativ zu jeweils einer Elektrode zusammengefasst werden.

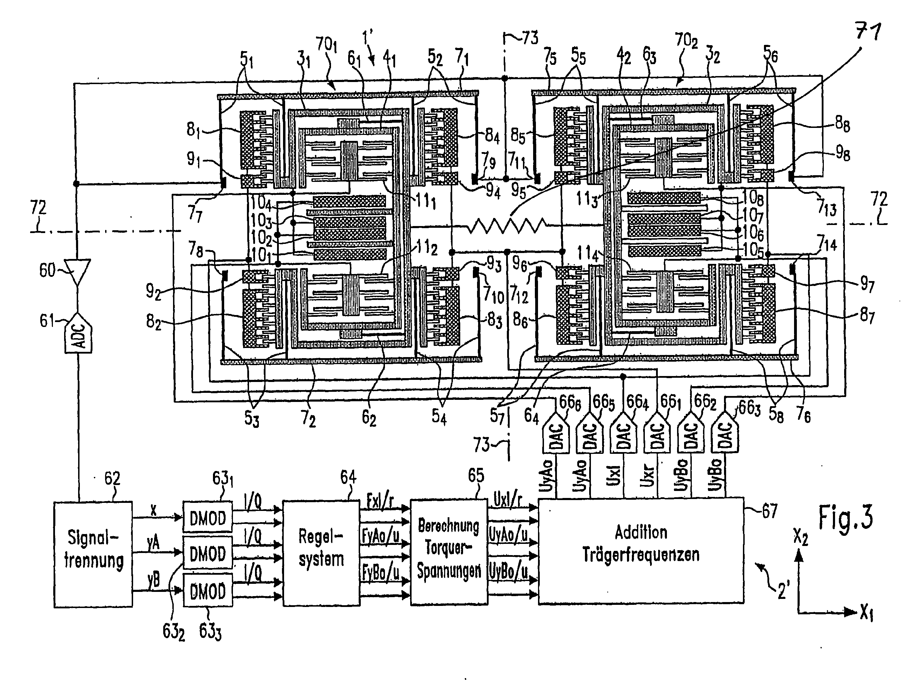

In der folgenden Beschreibung soll unter Bezugnahme auf Fig. 3 eine weitere mögliche Ausführungsform des erfindungsgemäßen Corioliskreisels sowie dessen Funktionsweise näher beschrieben werden.

Fig. 3 zeigt den schematischen Aufbau eines gekoppelten Systems 1' aus einem ersten Resonator $70_1$ und einem zweiten Resonator $70_2$. Der erste Resonator $70_1$ ist mit dem zweiten Resonator $70_2$ über ein mechanischen Kopplungselement 71, eine Feder, gekoppelt. Der erste und der zweite Resonator $70_1$, $70_2$ sind in einem gemeinsamen Substrat ausgebildet und können entlang einer gemeinsamen Schwingungsachse 72 gegentaktig zueinander in Schwingung versetzt werden. Der erste und der zweite Resonator $70_1$, $70_2$ sind identisch und werden über eine Symmetrieachse 73 aufeinander abgebildet. Der Aufbau des ersten und des zweiten Resonators $70_1$, $70_2$ wurde bereits im Zusammenhang mit Fig. 1 und 2 erläutert und wird deshalb nicht nochmals erklärt; identische bzw. einander entsprechende Bauteile bzw. Bauteilgruppen sind mit den gleichen Bezugsziffern gekennzeichnet, wobei identische Bauteile, die unterschiedlichen Resonatoren angehören, mit unterschiedlichen Indices gekennzeichnet sind.

Ein wesentlicher Unterschied zwischen den in Fig. 3 gezeigten Doppelschwingern und den in Fig. 1 und 2 gezeigten Doppelschwingern ist, dass einige der Einzelelektroden konstruktiv zu einer Gesamtelektrode zusammengefasst werden. So bilden beispielsweise die mit den Bezugsziffern $8_1$, $8_2$, $9_1$ und $9_2$ gekennzeichneten Einzelelektroden in Fig. 3 eine gemeinsame Elektrode. Weiterhin bilden die mit den Bezugsziffern $8_3$, $8_4$, $9_3$ und $9_4$ gekennzeichneten Einzelelektroden eine gemeinsame Elektrode, und die mit den Bezugsziffern $10_4$, $10_2$, $11_2$ sowie den Bezugsziffern $11_1$, $10_3$ und $10_1$ jeweils eine Gesamtelektrode. Das Gleiche gilt analog für das andere Doppelschwingersystem.

Bei Betrieb des erfindungsgemäßen gekoppelten Systems 1' schwingen die beiden Resonatoren $70_1$, $70_2$ entlang der gemeinsamen Schwingungsachse 72 im Gegentakt. Damit ist das gekoppelte System 1' unempfindlich gegenüber externen Störungen bzw. gegenüber Störungen, die durch das gekoppelte System 1' selbst in das Substrat, in dem die Resonatoren $70_1$ und $70_2$ gelagert sind, abgegeben werden.

Wenn das gekoppelte System 1' gedreht wird, so werden die zweiten Schwinger $4_1$ und $4_2$ in zueinander entgegengesetzte Richtungen ausgelenkt (in X2-Richtung und entgegengesetzt zur X2-Richtung). Tritt eine Beschleunigung des gekoppelten Systems 1' auf, so werden die zweiten Schwinger $4_1$, $4_2$ jeweils in die gleiche Richtung, nämlich in Richtung der Beschleunigung, ausgelenkt, insofern diese in oder entgegengesetzt der X2-Richtung wirkt. Somit lassen sich gleichzeitig oder wahlweise Beschleunigungen und Drehungen messen.

Prinzipiell ist es möglich, das gekoppelte System 1' auf Basis der in Fig. 1 und 2 beschriebenen Auswerte-/Anregungselektronik 2 zu betreiben. In der in Fig. 3 gezeigten Ausführungsform wird jedoch stattdessen ein alternatives Verfahren (Trägerfrequenzverfahren) eingesetzt. Dieses Betriebsverfahren soll im Folgenden beschrieben werden.

Die mit Bezugsziffer 2' gekennzeichnete Auswerte-/Anregungselektronik 2 weist drei Regelkreise auf: Einen ersten Regelkreis zur Anregung bzw. Regelung einer Gegentaktschwingung der ersten Schwinger $3_1$ und $3_2$ entlang der gemeinsamen Schwingungsachse 72, einen zweiten Regelkreis zur Rückstellung und Kompensation der Schwingungen des zweiten Schwingers $4_1$ entlang der X2-Richtung, und einen Regelkreis zur Rückstellung und Kompensation der Schwingungen des zweiten Schwingers $4_2$ entlang der X2-Richtung. Die beschriebenen drei Regelkreise weisen einen Verstärker 60, einen Analog/Digital-Umwandler 61, ein Signaltrennungsmodul 62, ein erstes bis drittes Demodulationsmodul $63_1$ bis $63_3$, ein Regelmodul 64, ein Elektrodenspannungs-Berechnungsmodul 65, ein Trägerfrequenz-Additionsmodul 67, sowie einen ersten bis sechsten Digital/Analog-Umwandler $66_1$ bis $66_6$ auf.

Die Beaufschlagung der Elektroden $8_1$ bis $8_8$, $9_1$ bis $9_8$, $10_1$ bis $10_8$ sowie $11_1$ bis $11_4$ mit Trägerfrequenzen zum Abgriff/Erregung (Abgriffserregung) der Gegentaktschwingung der Schwingungen der zweiten Schwinger $4_1$, $4_2$ kann hierbei auf mehrerlei Art und Weise erfolgen: a) Unter Verwendung von drei unterschiedlichen Frequenzen, wobei jedem Regelkreis eine Frequenz zugeordnet ist, b) unter Verwendung von Rechtecksignalen im Zeitmultiplex-Verfahren, oder c) unter Verwendung einer Random-Phasen-Verwürfelung (stochastisches Modulationsverfahren). Die Beaufschlagung der Elektroden $8_1$ bis $8_8$, $9_1$ bis $9_8$, $10_1$ bis $10_8$ sowie $11_1$ bis $11_4$ erfolgt über die zusammengehörigen Signale UyAo, UyAu (für den zweiten Schwinger $4_1$) und Uxl, Uxr (für die Gegentaktresonanz von den ersten Schwingern $3_1$ zu $3_2$), sowie UyBu, und UyBo (für den zweiten Schwinger $4_2$), die in dem Trägerfrequenz-Additionsmodul 67 erzeugt und im Gegentakt mit o.g. Frequenzsignalen erregt werden. Der Abgriff der Schwingungen der ersten und zweiten Schwinger $3_1$, $3_2$, $4_1$ und $4_2$ erfolgt über die mit Bezugsziffern $7_7$, $7_9$, $7_{11}$ und $7_{13}$ gekennzeichneten Teile des Kreiselrahmens, die hier neben ihrer Funktion als Aufhängepunkte des Massensystems zusätzlich als Abgriffselektroden dienen. Dazu sind die beiden Resonatoren $70_1$, $70_2$ mit allen Rahmen-, Feder- und Verbindungselementen vorteilhafterweise elektrisch leitend ausgestaltet. Das durch die Kreiselrahmen-Teile $7_7$, $7_9$, $7_{11}$ und $7_{13}$ abgegriffene, dem Verstärker 60 zugeführte Signal enthält Information über alle drei Schwingungsmoden und wird durch den Analog/Digital-Umwandler 61 in ein digitales Signal umgewandelt, das dem Signaltrennungsmodul 62 zugeführt wird. In dem Signaltrennungsmodul 62 wird das zusammengesetzte Signal in drei unterschiedliche Signale getrennt: x (enthält Information über die Gegentaktschwingung), yA (enthält Information über die Auslenkung des zweiten Schwingers $4_1$), sowie yB (enthält Information über die Auslenkung des zweiten Schwingers $4_2$). Die Signaltrennung gestaltet sich je nach Typ des verwendeten Trägerfrequenzverfahrens (siehe oben a) bis c)) unterschiedlich. Die Signaltrennung erfolgt hierbei durch Demodulation mit dem entsprechenden Signal des verwendeten Trägerfrequenzverfahrens. Die Signale x, yA, sowie yB werden den Demodulationsmodulen $63_1$ bis $63_3$ zugeführt, die diese mit einer Arbeitsfrequenz der Gegentaktschwingung für 0° und 90° demodulieren. Das Regelmodul 64 sowie das Elektrodenspannungs-Berechnungsmodul 65 zur Regelung/Berechnung der Signale Fxl/r bzw. Uxl/r sind, vorzugsweise analog zu dem in Fig. 1 gezeigten Elekronikmodul 2 ausgestaltet.

Das Regelmodul 64 sowie das Elektrodenspannungs-Berechnungsmodul 65 zur Regelung/Berechnung der Signale FyAo/u, UyAo/u, sowie FyBo/u, UyBo/u sind vorzugsweise analog zu dem in Fig. 2 gezeigten Elekronikmodul 2 ausgestaltet; nur die Signale für die Rückstellung der Drehrate und der Quadratur nach der Multiplikation mit der Arbeitsfrequenz werden zusammen mit den DC-Spannungen für den Quadratur-Hilfsregler auf ein zusammengefaßtes Elektrodenpaar gegeben. Deshalb werden beide Signale addiert, so dass die Berechnung der Elekrodenspannungen die Rückstellsignale der Schwingfrequenz und das DC-Signal für die Quadraturregelung sowie die Frequenzabstimmung enthält. Die so berechneten Elelctrodenspannungen Uxl/r, UyAo/u und UyBo/v werden dann zu den Trägerfrequenz-Signalen addiert und gemeinsam über die Analog/Digital-Umwandler $66_1$ bis $66_6$ auf die Elektroden gegeben.

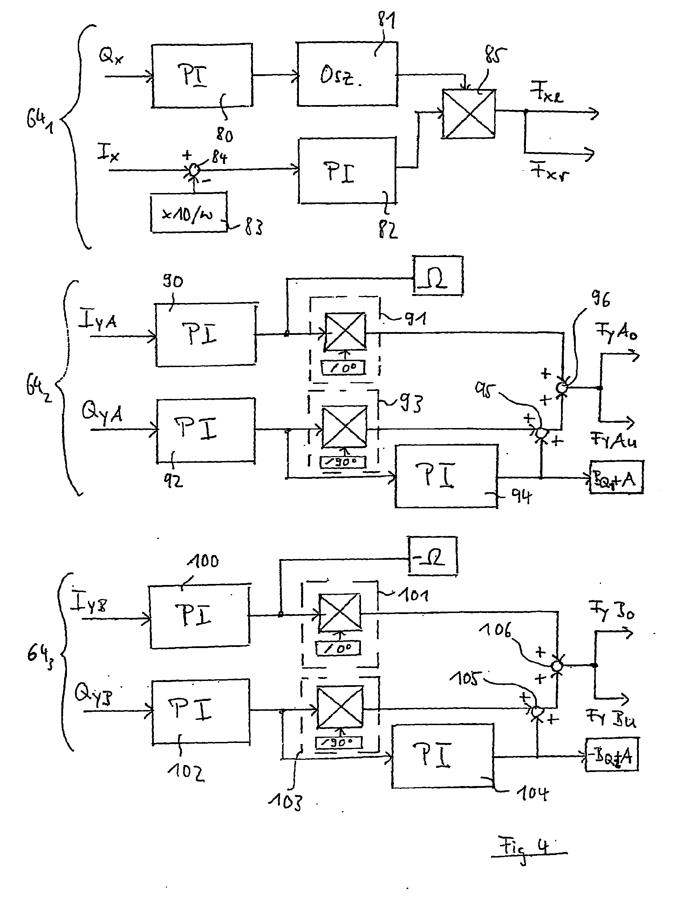

Fig. 4 zeigt eine bevorzugte Ausführungsform des mit Bezugsziffer 64 gekennzeichneten Regelsystems aus Fig. 3. Das Regelsystem 64 weist einen ersten bis dritten Teil $64_1$ bis $64_3$ auf. Der erste Teil $64_1$ weist einen ersten Regler SO, einen Frequenzgenerator 81, einen zweiten Regler 82, eine Elektrohikkomponente 83, eine Addierstufe 84, und einen Multiplizierer 85 auf. Die Funktionsweise des ersten Teils entspricht im Wesentlichen der Funktionsweise des in Fig. 1 gezeigten Elektronikmoduls 2 und wird deshalb hier nicht nochmals erläutert. Der zweite Teil $64_2$ weist einen ersten Regler 90, einen ersten Modulator 91, einen zweiten Regler 92, einen zweiten Modulator 93 und einen dritten Regler 94 auf. Ferner sind eine erste und eine zweite Addierstufe 95, 96 vorgesehen. Am Ausgang des ersten Reglers 90 kann ein Drehratensignal $\Omega$, und am Ausgang des dritten Reglers 94 kann ein zusammengesetztes Signal aus der Kompensation des Quadraturbias $B_{Q1}$ und einer Beschleunigung A ermittelt werden. Der dritte Teil $64_3$ des Regelsystems 64 weist einen ersten Regler 100, einen ersten Modulator 101, einen zweiten Regler 102, einen zweiten Modulator 103 und einen dritten Regler 104 auf. Weiterhin sind eine erste und eine zweite Addierstufe 105, 106 vorgesehen. Am Ausgang des ersten Reglers 100 kann ein Drehratensignal $\Omega$ mit negativem Vorzeichen abgegriffen werden, und am Ausgang des dritten Reglers 104 ein zusammengesetzten Signal aus der Kompensation des Quadraturbias $B_{Q2}$ mit negativem Vorzeichen und einem Beschleunigungssignal A. Die Funktionsweise des zweiten und dritten Teils $64_2$ und $64_3$ entspricht der des in Fig. 2 gezeigten Elektronikmoduls 2 und wird deshalb hier nicht nochmals erläutert.

Die oben beschriebenen Trägerfrequenzverfahren mit Gegentakterregung haben den Vorteil, dass an dem Verstärker 60 nur dann ein Signal anliegt, wenn die linearen Schwinger $3_1$, $3_2$ sowie $4_1$ und $4_2$ ausgelenkt sind. Die zur Erregung dienenden Frequenzsignale können diskrete Frequenzen oder rechteckige Signale sein. Wegen der leichteren Erzeugung und Verarbeitung werden Rechteckerregungen bevorzugt.

Lineare Doppelschwinger zeichnen sich durch besonders hohe Güte wegen der linearen Bewegung in der Waferebene aus. Die Kompensation des Quadraturbias bei linearen Resonatoren, bei denen mindestens ein Schwinger einseitig eingespannt ist, lässt sich erfindungsgemäß global durch Justieren der Orthogonalität der Federn erreichen. Das wird dadurch erzielt, dass die Feder des einseitig eingespannten Schwingers über eine Gleichspannung im Winkel so verändert wird, dass der gemessene Quadraturbias $B_Q$ Null wird. Dazu wird, wie oben gezeigt, ein entsprechender Regelkreis aufgeschaltet, der die o. g. Gleichspannung so regelt, dass $B_Q = 0$ wird. Durch diesen Regelkreis wird der Quadraturbias am Entstehungsort kompensiert und die Genauigkeit von linearen Schwingkreiseln um Größenordnungen verbessert.

Die linearen Schwinger eines Resonators werden vorzugsweise jeweils in Doppelresonanz betrieben.

**Patentansprüche**

1. Verfahren zur Quadraturblas-Koinpensation in einem Corioliskreisel, dessen Resonator (1) als gekoppeltes System aus einem ersten und einem zweiten linearen Schwinger (3, 4) ausgestaltet Ist, wobei der erste Schwinger (3) an einem Kreiselrahmen des Corioliskreisels durch erste Federelemente ($5_1$ bis $5_4$) befestigt ist, und der zweite Schwinger (4) an dem ersten Schwinger (3) durch zweite Federelemente ($6_1$. $6_2$) befestigt ist, mit den folgenden Schritten:

    - Ermitteln des Quadraturbias des Corioliskreisels,
    - Erzeugen eines elektrostatischen Felds zur Änderung der gegenseitigen Ausrichtung der beiden Schwinger (3, 4) zueinander, wobei durch das elektrostatische Feld eine Gleichkraft erzeugt wird, die eine Änderung der Ausrichtung der ersten Federelemente ($5_1$ bis $5_4$) und/oder eine Änderung der Ausrichtung der zweiten Federelemente ($6_1$, $6_2$) bewirkt, und die Ausrichtung/Stärke des elektrostatischen Felds so geregelt wird, dass der ermittelte Quadraturbias möglichst klein wird.

2. Verfahren nach Anspruch 1, **dadurch gekennzeichnet, dass** die Ausrichtung der ersten Federelemente ($5_1$ bis $5_4$) geändert wird, indem die Position/Ausrichtung des ersten Schwingers (3) durch das elektrostatische Feld geändert wird, und dass die Ausrichtung der zweiten Federelemente ($6_1$, $6_2$) geändert wird, indem die Position/Ausrichtung des zweiten Schwingers (4) durch das elektrostatische Feld geändert wird.

3. Verfahren nach Anspruch 1 oder 2, **dadurch gekennzeichnet, dass** das elektrische Feld eine Orthogonalisierung der Ausrichtungen der ersten und zweiten Federelemente ($6_1$, $6_2$. $5_1$ bis $5_4$) zueinander bewirkt.

4. Corioliskreisel, mit einem ersten Resonator (1), der als gekoppeltes System aus einem ersten und einem zweiten linearen, Schwinger (3, 4) ausgestaltet ist, wobei der erste Schwinger (3) an einem Kreiselrahmen des Corioliskreisels durch erste Federelemente (5, bis $5_4$) befestigt ist, und der zweite Schwinger (4), an dein ersten Schwinger (3) durch zweite Federelemente ($6_1$, $6_2$) befestigt ist, mit:

   - einer Einrichtung zur Erzeugung eines elektrostatischen Felds ($11_1$', $11_2$', $10_1$ bis $10_4$), durch das die Ausrichtung der beiden Schwinger (3, 4) zueinander änderbar ist, indem durch das elektrostatische Feld eine Gleichkraft erzeugt wird, die einen Ausrichtungswinkel der ersten Federelemente (5, bis $5_4$) bezüglich des Kreiselrahmens ($7_3$, $7_4$) und/oder einen Ausrichtungswinkel der zweiten Federelemente ($6_1$, $6_2$) bezüglich des ersten Schwingers (3) ändert,
   - einer Einrichtung (45, 47) zur Ermittlung eines Quadraturbias des Corioliskreisels, und
   - einem Regelkreis (55, 56, 57), durch den die Stärke des elektrostatischen Felds in Abhängigkeit des ermittelten Quadraturbias so geregelt wird, dass der ermittelte Quadraturbias möglichst klein wird.

5. Corioliskreisel nach Anspruch 4, **dadurch gekennzeichnet, dass** sämtliche zweiten Federelemente ($6_1$ bis $6_2$), die den zweiten Schwinger (4) mit dem ersten Schwinger (3) verbinden, so ausgestaltet sind, dass eine Krafteinleitung von dem ersten Schwinger (3) auf den zweiten Schwinger (4) im Wesentlichen von einer Seite des ersten Schwingers (3) aus erfolgt.

6. Corioliskreisel nach einem der Ansprüche 4 bis 5, **dadurch gekennzeichnet, dass** sämtliche ersten Federelemente ($5_1$ bis $5_4$), die den ersten Schwinger (3) mit dem Kreiselrahmen ($7_3$, $7_4$) des Corioliskreisels verbinden, parallel und in einer Ebene zueinander angeordnet sind, wobei die Anfangs- und Endpunkte der ersten Federelemente ($5_1$ bis $5_4$) jeweils auf einer gemeinsamen Achse liegen.

7. Corioliskreisel (1') nach einem der Ansprüche 4 bis 6, **gekennzeichnet durch** einen zweiten Resonator ($70_1$, $70_2$), der als gekoppeltes System aus einem ersten und einem zweiten linearen Schwinger ($3_1$, $3_2$, $4_1$, $4_2$) ausgestaltet ist, wobei der erste Resonator ($70_1$) mit dem zweiten Resonator ($70_2$) mechanisch/elektrostatisch so verbunden/ gekoppelt ist, dass beide Resonatoren entlang einer gemeinsamen Schwingungsachse (72) gegentaktig zueinander in Schwingung versetzbar sind.

8. Corioliskreisel (1') nach Anspruch 7, **dadurch gekennzeichnet, dass** die Ausgestaltungen des ersten und des zweiten Resonators ($70_1$, $70_2$) identisch sind, wobei die Resonatoren ($70_1$, $70_2$) achsensymmetrisch zueinander angeordnet sind bezüglich einer Symmetrieachse (73), die senkrecht auf der gemeinsamen Schwingungsachse (72) steht.

**Claims**

1. Method for quadrature-bias compensation in a Coriolis gyro, whose resonator (1) is in the form of a coupled system comprising a first and a second linear oscillator (3, 4), in which the first oscillator (3) is attached to a gyro frame of the Coriolis gyro by means of first spring elements ($5_1$ to $5_4$) and the second oscillator (4) is attached to the first oscillator (3) by means of second spring elements ($6_1$, $6_2$),
   having the following steps:

   - determination of the quadrature bias of the Coriolis gyro,
   - production of an electrostatic field in order to vary the mutual alignment of the two oscillators (3, 4) with respect to one another, with the electrostatic field producing a constant force which causes a change in the alignment of the first spring elements ($5_1$ to $5_4$) and/or a change in the alignment of the second spring elements ($6_1$, $6_2$), and with the alignment/strength of the electrostatic field being regulated such that the determined quadrature bias is as small as possible.

2. Method according to Claim 1, **characterized in that** the alignment of the first spring elements ($5_1$ to $5_4$) is varied by varying the position/alignment of the first oscillator (3) by means of the electrostatic field, and **in that** the alignment of the second spring elements ($6_1$, $6_2$) is varied by varying the position/alignment of the second oscillator (4) by means of the electrostatic field.

**3.** Method according to Claim 1 or 2, **characterized in that** the electrical field results in the alignments of the first and second spring elements ($6_1$, $6_2$, $5_1$ to $5_4$) being made orthogonal with respect to one another.

**4.** Coriolis gyro, having a first resonator (1) which is in the form of a coupled system comprising a first and a second linear oscillator (3, 4), with the first oscillator (3) being attached to a gyro frame of the Coriolis gyro by means of first spring elements ($5_1$ to $5_4$), and the second oscillator (4) being attached to the first oscillator (3) by means of second spring elements ($6_1$, $6_2$), having,

- a device ($11_1$', $11_2$', $10_1$ to $10_4$) for production of an electrostatic field by means of which the alignment of the two oscillators (3, 4) with respect to one another can be varied, in which the electrostatic field produces a constant force which varies the alignment angle of the first spring elements ($5_1$ to $5_4$) with respect to the gyro frame ($7_3$, $7_4$) and/or the alignment angle of the second spring elements ($6_1$, $6_2$) with respect to the first oscillator (3),
- a device (45, 47) for determination of a quadrature bias of the Coriolis gyro, and
- a control loop (55, 56, 57), by means of which the strength of the electrostatic field is regulated as a function of the determined quadrature bias such that the determined quadrature bias is as small as possible.

**5.** Coriolis gyro according to Claim 4, **characterized in that** all of the second spring elements ($6_1$ to $6_2$) which connect the second oscillator (4) to the first oscillator (3) are designed such that force is introduced from the first oscillator (3) to the second oscillator (4) essentially from one side of the first oscillator (3).

**6.** Coriolis gyro according to one of Claims 4 to 5, **characterized in that** all of the first spring elements ($5_1$ to $5_4$) which connect the first oscillator (3) to the gyro frame ($7_3$, $7_4$) of the Coriolis gyro are arranged parallel and on the same plane as one another, with the start and end points of the first spring elements ($5_1$ to $5_4$) each being located on a common axis.

**7.** Coriolis gyro (1') according to one of Claims 4 to 6, **characterized by** a second resonator ($70_1$, $70_2$), which is in the form of a coupled system comprising a first and a second linear oscillator ($3_1$, $3_2$, $4_1$, $4_2$), with the first resonator ($70_1$) being mechanically/electrostatically connected/coupled to the second resonator ($70_2$) such that the two resonators can be caused to oscillate in antiphase with respect to one another along a common oscillation axis (72).

**8.** Coriolis gyro (1') according to Claim 7, **characterized in that** the configurations of the first and of the second resonator ($70_1$, $70_2$) are identical, with the resonators ($70_1$, $70_2$) being arranged axially symmetrically with respect to one another, with respect to an axis of symmetry (73) which is at right angles to the common oscillation axis (72).

**Revendications**

**1.** Procédé de compensation de la polarisation de quadrature dans un gyroscope vibrant, dont le résonateur (1) est réalisé sous la forme d'un système couplé constitué d'un premier et d'un second oscillateur linéaire (3, 4), dans lequel le premier oscillateur (3) est fixé à un cadre de gyroscope du gyroscope vibrant par des premiers éléments élastiques ($5_1$ à $5_4$), et le second oscillateur (4) est fixé au premier oscillateur (3) par des seconds éléments élastiques ($6_1$, $6_2$), comportant les étapes suivantes :

- détection de la polarisation de quadrature du gyroscope vibrant,
- génération d'un champ électrostatique pour modifier l'orientation opposée des deux oscillateurs (3, 4), dans lequel, grâce au champ électrostatique, une force d'équilibrage est générée, qui provoque une modification de l'orientation des premiers éléments élastiques ($5_1$ à $5_4$) et/ou une modification de l'orientation des seconds éléments élastiques ($6_1$, $6_2$), et l'orientation/intensité du champ électrostatique est réglée de sorte que la polarisation de quadrature détectée soit la plus petite possible.

**2.** Procédé selon la revendication 1, **caractérisé en ce que** l'orientation des premiers éléments élastiques ($5_1$ à $5_4$) est modifiée tandis que la position/orientation du premier oscillateur (3) est modifiée par le champ électrostatique, et **en ce que** l'orientation des seconds éléments élastiques ($6_1$, $6_2$) est modifiée, tandis que la position/orientation du second oscillateur (4) est modifiée par le champ électrostatique.

**3.** Procédé selon la revendication 1 ou 2, **caractérisé en ce que** le champ électrique provoque une orthogonalisation des orientations des premiers et seconds éléments élastiques ($6_1$, $6_2$, $5_1$ à $5_4$) l'une par rapport à l'autre.

**4.** Gyroscope vibrant comportant un premier résonateur (1), qui est réalisé sous la forme d'un système couplé composé d'un premier et d'un second oscillateur linéaire (3, 4) dans lequel le premier oscillateur (3) est fixé à un cadre de gyroscope du gyroscope vibrant par des premiers éléments élastiques ($5_1$ à $5_4$), et le second oscillateur (4) est fixé au premier oscillateur (3) par des seconds éléments élastiques ($6_1$, $6_2$), comportant :

- un dispositif pour générer un champ électrostatique ($11_1$, $11_2$ ; $10_1$ à $10_4$), grâce auquel l'orientation des deux oscillateurs (3, 4) peut être modifiée l'une par rapport à l'autre, tandis que, grâce au champ électrostatique, une force d'équilibrage est générée, qui modifie un angle d'orientation des premiers éléments élastiques ($5_1$ à $5_4$) en ce qui concerne le cadre de gyroscope ($7_3$, $7_4$) et/ou un angle d'orientation des seconds éléments élastiques ($6_1$, $6_2$) en ce qui concerne le premier oscillateur (3),
- un dispositif (45, 47) pour rechercher une polarisation de quadrature du gyroscope vibrant, et
- un circuit de réglage (55, 56, 57), grâce auquel l'intensité du champ électrostatique est réglée en fonction de la polarisation de quadrature détectée de sorte que la polarisation de quadrature recherchée est la plus petite possible.

**5.** Gyroscope vibrant selon la revendication 4, **caractérisé en ce que** tous les seconds éléments élastiques ($6_1$ à $6_2$), qui relient le second oscillateur (4) au premier oscillateur (3), sont réalisés de sorte qu'une application de force du premier oscillateur (3) sur le second oscillateur (4) se produit sensiblement depuis un côté du premier oscillateur (3).

**6.** Gyroscope vibrant selon l'une des revendications 4 à 5, **caractérisé en ce que** l'ensemble des premiers éléments élastiques ($5_1$ à $5_4$), qui relient le premier oscillateur (3) au cadre de gyroscope ($7_3$, $7_4$) du gyroscope vibrant, sont disposés parallèles et dans un plan les uns par rapport aux autres, dans lequel le point de départ et le point final des premiers éléments élastiques ($5_1$ à $5_4$) se trouvent respectivement sur un axe commun.

**7.** Gyroscope vibrant (1') selon l'une des revendications 4 à 6, **caractérisé par** un second résonateur ($70_1$, $70_2$), qui est réalisé sous la forme d'un système couplé constitué d'un premier et d'un second oscillateur linéaire ($3_1$, $3_2$, $4_1$, $4_2$), dans lequel le premier résonateur ($70_1$) est relié/couplé au second résonateur ($70_2$) mécaniquement/électrostatiquement, de sorte que les deux résonateurs peuvent vibrer en opposition de phase l'un par rapport à l'autre le long d'un axe d'oscillation commun (72).

**8.** Gyroscope vibrant (1') selon la revendication 7, **caractérisé en ce que** les réalisations du premier et du second résonateur ($70_1$, $70_2$) sont identiques, dans lequel les résonateurs ($70_1$, $70_2$) sont disposés symétriques par rapport à l'axe en ce qui concerne un axe de symétrie (73), qui se trouve perpendiculaire à l'axe d'oscillation commun (72).

Fig. 1

EP 1 706 707 B1

13

Fig. 2

EP 1 706 707 B1

EP 1 706 707 B1

Signaltrennung

DMOD

Regelsystem

Berechnung
Torquer-
Spannungen

Addition
Trägerfrequenzen

ADC

DAC

x
yA
yB

I/Q

Fxl/r
FyAo/u
FyBo/u

Uxl/r
UyAo/u
UyBo/u

UyAo
UyAo
Uxl
Uxr
UyBo
UyBo

Fig.3

X₂

X₁

2'

Fig. 4